# EUROPEAN PATENT APPLICATION

(11) **EP 4 848 532 A1**
(43) Date of publication of application: **02.12.2026**
(21) Application number: 26179805.2
(22) Date of filing: 20.05.2026
(51) Int. Cl.: H02J 7/70

(54) **MODULAR CRADLE SYSTEM FOR ELECTRONIC DEVICES**

(30) Priority: 30.05.2025 US 202519224218
(71) Applicant: Zebra Technologies Corporation, Lincolnshire, IL 60069 (US)
(72) Inventor: Kuo, Hui-Chi, 60069 Lincolnshire (US); Lim, Sunghun, 60069 Lincolnshire (US); Chaumont, Chad, 60069 Lincolnshire (US); Huang, Huang Chih, 60069 Lincolnshire (US); Liao, Feikai, 60069 Lincolnshire (US); Betadur, Naveen, 60069 Lincolnshire (US); Cordes, Kevin, 60069 Lincolnshire (US); Majitha, Rajat, 60069 Lincolnshire (US); Chang, Jonathan, 60069 Lincolnshire (US)
(74) Representative: LKGLOBAL Partnerschaftsgesellschaft mbB

(57) **Abstract**

A cradle includes: a cradle housing having an upper portion and a lower portion joined by a perimeter wall; a slot at the upper portion of the cradle housing, the slot configured to receive an electronic device and having a first connector configured to engage with the electronic device; a guide channel at the lower portion of the cradle housing, the guide channel configured to removably receive a connector housing of a cradle base; and a second connector disposed within the guide channel, the second connector configured to engage with a complementary connector disposed on the connector housing of the cradle base when the connector housing of the cradle base is removably received within the guide channel.

## Description

### BACKGROUND

Electronic devices, such as mobile computers, barcode scanners, and the like, may have rechargeable batteries that periodically require recharging. A charging cradle can accommodate an electronic device to deliver power to the device, e.g., to charge the device's battery. Some charging cradles can accommodate a plurality of such electronic devices. Accommodating distinct types of electronic devices in a multi-device cradle, however, may involve time-consuming disassembly and/or other manipulation of the cradle.

### BRIEF DESCRIPTION OF THE SEVERAL VIEWS OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention and explain various principles and advantages of those embodiments.
FIG. 1 is a diagram of a cradle system.
FIG. 2 is a diagram of a cradle of the system of FIG. 1, viewed from below.
FIG. 3 is a diagram of a base of the system of FIG. 1.
FIG. 4 is a cross section of the base shown in FIG. 3.
FIG. 5 is a detail view of a portion of the base shown in FIG. 3.
FIG. 6 is a diagram of another cradle of the system of FIG. 1.
FIG. 7 is an exploded diagram of the cradle of FIG. 6, with three modular cups.
FIG. 8 is a bottom view of one of the cups shown in FIG. 7.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

Examples disclosed herein are directed to a cradle including: a cradle housing having an upper portion and a lower portion joined by a perimeter wall; a slot at the upper portion of the cradle housing, the slot configured to receive an electronic device and having a first connector configured to engage with the electronic device; a guide channel at the lower portion of the cradle housing, the guide channel configured to removably receive a connector housing of a cradle base; and a second connector disposed within the guide channel, the second connector configured to engage with a complementary connector disposed on the connector housing of the cradle base when the connector housing of the cradle base is removably received within the guide channel.

Additional examples disclosed herein are directed to a cradle base, including: a housing having a lower portion and an upper portion joined by a perimeter wall, the upper portion having a support surface; a connector housing protruding upwards from the support surface of the upper portion of the housing, the connector housing configured to slidingly engage with a guide channel of a cradle to retain the cradle against the support surface; and a connector disposed on the connector housing, the connector configured to engage with a complementary connector of the cradle.

Further examples disclosed herein are directed to a cradle system, comprising: a cradle base having: a support surface; a connector housing protruding upwards from the support surface and extending along a portion of the support surface; and a base connector disposed on the connector housing; and a cradle having: a slot configured to receive an electronic device; a guide channel on an opposite of the cradle from the slot, the guide channel configured to removably receive the connector housing of the cradle base; and a cradle connector within the guide channel, the cradle connector configured to engage with the base connector in response to receipt of the connector housing within the guide channel.

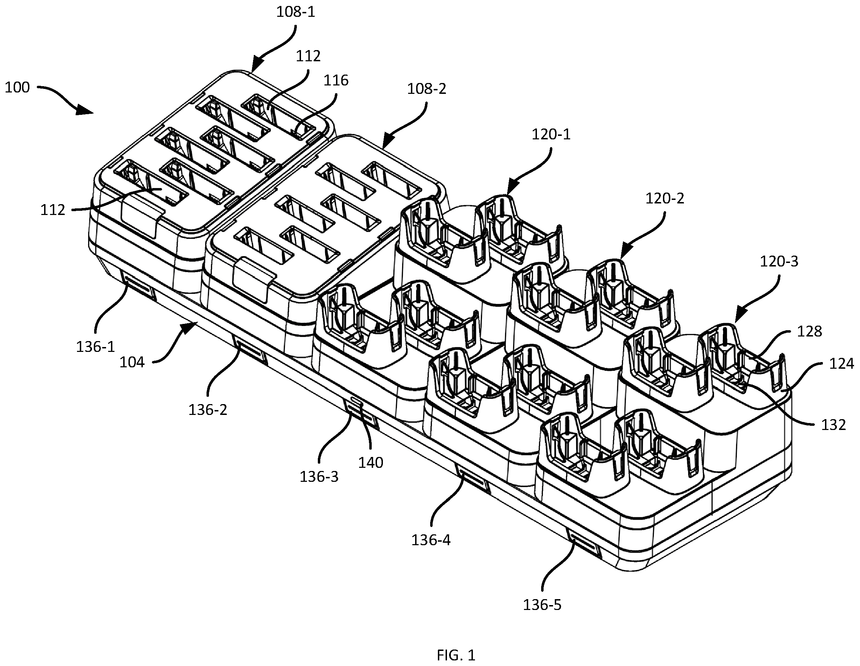

FIG. 1 illustrates a cradle system 100 for providing power and/or connectivity to any of a variety of electronic devices. The cradle system 100 can, for example, supply electrical power to the electronic devices, and/or connect the electronic devices with one or more networks, such as a local area network through which the electronic devices can receive software updates, upload telemetry data, and the like.

The nature of the electronic devices accommodated by the cradle system 100 can vary widely. For example, the cradle system 100 can be deployed in an environment such as a warehouse or other facility in which a pool of electronic devices are operated. The composition of the pool of devices may change over time, e.g., as new models of devices, e.g., barcode scanners, mobile computers, and the like, are introduced. The pool of devices may also be mixed, in that more than one model and/or type of device may be present in the facility in a given time. The form factors of such devices can vary, such that a given device may require a particular physical interface with the cradle system 100, while another device may require a different physical interface.

To accommodate variable device pools such as those mentioned above, some charging systems include replaceable components that define the physical interfaces with electronic devices. Thus, a base unit, e.g., containing components that connect to an external power source and/or communications network, can have any of a variety of device interfaces affixed thereto, to convey electrical power and/or network connections to different device types. The device interfaces in such systems may, however, require tooling and/or specialized knowledge to replace. Further, internal electrical connections between the base unit and the device interfaces may require re-routing, e.g., by manipulating cables or the like in order to replace a device interface. Tool-based disassembly of such systems, along with manual cable routing requirements, can increase the cost of operating such systems, and may increase the likelihood of misconfiguration, damage to the charging system, or the like.

The cradle system 100 includes various features that may mitigate the above disadvantages. The cradle system 100 includes a cradle base 104, also referred to herein as the base 104, that can support one or more cradles of different types. In the example shown in FIG. 1, the base 104 supports up to five cradles, including first and second cradles 108-1 and 108-2, collectively referred to as the cradles 108 and generically referred to as a cradle 108 (similar collective nomenclature is used for other components discussed herein that have hyphenated reference numbers). The cradles 108 can be, for example, "toaster" cradles that include one or more slots 112 configured to receive battery packs for mobile computers, handheld tools (e.g., drills, or the like) or other suitable devices. In the illustrated example, each cradle 108 includes six slots 112 configured to receive electronic devices (e.g., battery packs as mentioned above). Each slot 112 includes a connector 116 therein, configured to engage with a complementary connector of a device placed in the slot 112, and to provide power and/or data to the device.

Other cradles 108 can include different numbers of slots 112 than the six shown in FIG. 1. Further, the shape and size of the slots 112 can vary between cradles 108. As will be apparent in the discussion below, cradles 108 with varying configurations (e.g., with more than six, or fewer than six, slots 112, and/or with differently shaped or sized slots 112) can be mounted to the base 104 in place of the cradles 108 shown in FIG. 1 without tooling. Further, the cradles 108 can be used in a standalone configuration, e.g., without the base 104 in some examples.

The cradle system 100 also includes, in the illustrated example, three cradles 120-1, 120-2, and 120-3. The cradles 120 can be configured to receive devices such as mobile computers, barcode scanners, or the like. Each cradle 120 includes one or more cups 124 (in this example, each cradle 120 includes four cups 124) defining corresponding slots 128 for receiving the devices. Each cup 124 includes a connector 132 within the slot 128, configured to engage with a complementary connector of a device placed in the slot 128, and to provide power and/or data to the device. The system 100 can include any combination of cradles 108 and/or 120, as each cradle 108 and 120 can be detached from the base 104. As noted in connection with the cradles 108, the cradles 120 can also be operated independently of the base 104 to provide power and/or data to the devices placed therein.

The slots 112 and 128 are defined at upper portions of the cradles 108 and 120. Opposing lower portions of the cradles 108 and 120, as discussed below, include certain structural features configured to engage with the base 104 to removably couple the cradles 108 and 120 to the base 104. The base 104 can also include, in some examples as illustrated in FIG. 1, actuators 136-1, 136-2, 136-3, 136-4, and 136-5 configured to release latching mechanisms that retain the corresponding cradles to the base 104 (e.g., the actuator 136-4 releases the cradle 120-2). The base 104 can also include, as shown in FIG. 1, an indicator 140 such as a light emitter or the like, indicating that the base 104 is powered on and/or indicating a status of the base 104 (e.g., whether the base 104 is actively charging any devices).

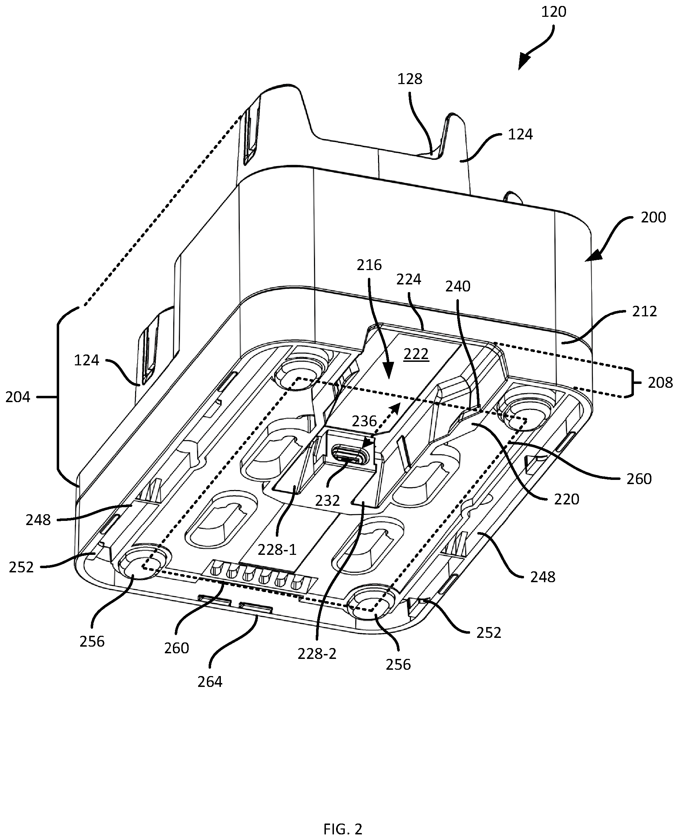

Turning to FIG. 2, a cradle 120 is shown in isolation, from below. The cradle 120 comprises a housing 200 with an upper portion 204 including the cups 124, and a lower portion 208 including retaining features discussed below in greater detail. The upper and lower portions 204 and 208 are joined by a perimeter wall 212. The terms "upper" and "lower" as used herein indicate the portion of the cradles 108 and 120 that physically interact with electronic devices (upper), and the portion of the cradles 108 and 120 that physically interact with the base 104 (lower). Depending on the orientation in which the cradle system 100 is installed (e.g., the cradle system 100 may be wall mounted, with the slots 112 and 128 being substantially horizontal), the portions 204 and 208 need not be at substantially different elevations.

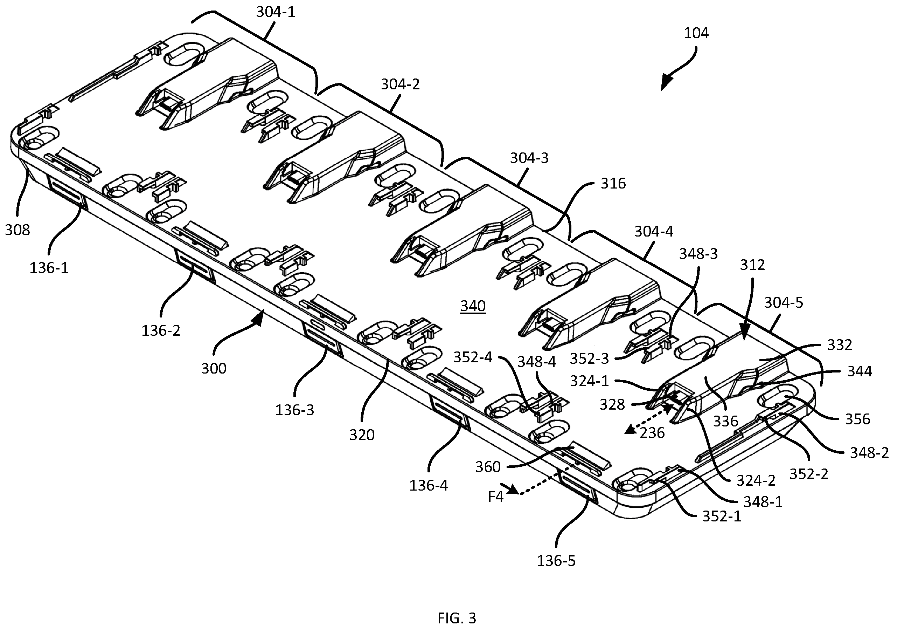

The cradle 120 includes a guide channel 216 at the lower portion 208, e.g., recessed into the housing 200 from a planar surface 220 configured to rest on the base 104. The upper and lower bounds of the guide channel 216 are defined, in other words, by the planar surface 220 (lower bound) and a planar surface 222 (also referred to as the upper surface 222, defining an upper bound of the guide channel). The guide channel 216 is configured to receive a connector housing of the base 104, as described further below in connection with FIG. 3. The guide channel 216, in this example, extends along the lower portion 208 from an open end 224 at a rear portion of the perimeter wall 212, to a closed end 228. In this example, the closed end 228 is defined by two channel portions 228-1 and 228-2, forming a fork-shaped end of the guide channel 216. The guide channel 216 can have a wide variety of profiles. For example, in the embodiment shown in FIG. 2, the channel 216 has a greater width at the open end 224 than at the closed end 228, and thus tapers from the open end 224 to the closed end 228.

The cradle 120 includes a connector 232 disposed within the guide channel 216. The connector 232, in the illustrated example, is a USB-C port, e.g., configured to receive a USB-C plug of the base 104 (discussed below in connection with FIG. 3). The connector 232 can have a wide variety of other forms in other examples, e.g., including pogo pins, a USB-A connector, or the like. The connector 232 extends into the guide channel 216, between the channel portions 228. The connector 232 is configured to engage with a complementary connector of the base 104 in a direction of engagement 236 that is parallel with the surface 220. In other words, the guide channel 216 and the connector 232 are configured to slide over the connector housing of the base 104 in order to engage the connector 232.

The guide channel 216 can have other configurations in other embodiments. For example, in some embodiments the end 224 of the channel 216 need not be open, provided that a length of the channel 216 (between the ends 224 and 228 is sufficient to accommodate the connector housing of the base and to permit sliding of the connector housing within the channel 216 to engage and disengage the connector 232. Further, although the channel 216 is centered relative to the rear portion of the perimeter wall 212, and the connector 232 is centered within the channel 216, in other examples, the channel 216 can be off-center on the lower portion 208. In still other examples, the connector 232 need not be centered within the channel 216.

The guide channel 216 can include retaining features, such as one or more flanges 240 extending into the channel 216, e.g., coplanar with the surface 220. The flanges 240 can be configured to wedge underneath corresponding ledges on the base 104, to constrain the cradle 120 against the base 104. For example, the channel 216 may permit motion of the cradle 120 in the direction 236, but substantially prevent motion of the cradle 120 in a direction perpendicular to the direction 236 in the plane of the surface 220. The flange(s) 240 may further prevent motion of the cradle 120 lifting away from the base 104.

The cradle 120 can include further retaining features, such as at least one auxiliary channel 248 (two are shown in this example) configured to receive a rail of the base 104. The auxiliary channels 248 can each include at least one flange 252, configured to engage with corresponding ledges of the base 104, to retain the cradle 120 against the base 104.

The cradle 120 can also include one or more feet 256 (four feet 256 are shown in FIG. 2), e.g., facilitating the standalone use of the cradle 120, independent of the base 104. When the cradle 120 is used alone, the feet 256 may rest on a support surface, and a cable or the like can supply power and/or data via the connector 232. The feet 256 define a planar support surface 260, indicated as a dashed rectangle extending between the feet 256 in FIG. 2, that rests on a table or other suitable surface when the cradle 120 is used independently of the base 104. Further, as seen in FIG. 2, the planar surface 220 adjacent to the guide channel 216, and the planar surface 222 defining the upper end of the channel 216, are each parallel to the support surface 260. The direction of engagement 236 is substantially perpendicular to the support surface 260, and the surfaces 220 and 222. In other words, the cradle 120 is configured to slide in a direction parallel to the surfaces 256, 220, and 222 to engage the connector 232 with a complementary connector of the base 104. As will be apparent, the housing 200 contains internal cabling and/or other components that electrically interconnect the connector 232 and the connector(s) 132.

The cradle 120 can also include a hook 260, e.g., between the closed end 228 of the channel 216, and a forward portion 264 of the housing 200. The hook 260 is configured to engage with a latch of the base 104, to constrain sliding motion of the cradle 120 relative to the base 104 (that is, motion in the direction 236). The features of the lower portion 208 of the cradle 120 can also be provided on lower portions of the cradles 108, and of any other cradles for use with the base 104.

Turning to FIG. 3, the base 104 is shown in isolation. The base 104 includes a housing 300 that includes a lower portion, e.g., a surface on which the base 104 rests, and an upper portion that defines a plurality of mounting surfaces 304-1, 304-2, 304-3, 304-4, and 304-5. A perimeter wall 308 joins the upper portion and the lower portion. As will be apparent, the mounting surfaces 304 can each support a cradle 108 or 120. Each mounting surface includes a connector housing 312 extending along a portion of the mounting surface 304 and protruding upwards from the mounting surface 304. In the present example, the connector housing 312 extends from a first end adjacent to (e.g., coincident with) a rear edge 316 of the housing 300 towards a second, or forward, end in between the rear edge 316 and a forward edge 320 of the housing 300. The forward end of the connector housing 312 can include a pair of wings 324-1, 324-2 on either side of a connector 328. The wings 324 are parallel with the direction of engagement 236.

The connector housing 312 is configured to be received within the guide channel 216, and the wings 324 are configured to be received within the channel portions 228 discussed above in connection with FIG. 2. The connector housing 312 can have a profile that matches the profile of the guide channel 216, e.g., with a rear portion 332 having a greater width than a forward portion 336. The connector housing 312, in other words, may taper in the same manner as the guide channel 216, such that when the guide channel 216 slides over the connector housing 312, rearward motion of the guide channel 216 (that is, towards the rear edge 316) is halted when the narrower portion of the guide channel 216 contacts the transition to the wider portion 332 of the connector housing 312.

The connector 328, in this example, is a USB-C plug, as noted earlier. The connector 328 can be implemented as any of a variety of connectors, however, selected for compatibility with the connector 232 of the cradle 120. The connector 328 is oriented to engage with the connector 232 in the direction of engagement 236, e.g., as the cradle 120 slides along a support surface 340 of the base 104. As will be apparent, the connector housings 312 protrude outwards (e.g., upwards, when the base 104 is placed on a substantially horizontal surface) from the support surface 340.

Each mounting surface 304 of the base 104 can also include retaining features complementary to those mentioned above in connection with FIG. 2. For example, the connector housing 312 can include at least one ledge 344 configured to engage with the flange 240 of the guide channel 216, to retain the cradle 120 against the base 104. The mounting surface 304 can also include at least one rail 348 (in this example, the base 104 includes four rails 348-1, 348-2, 348-3, and 348-4 on each side of each mounting surface 304), including respective ledges 352-1, 352-2, 352-3, and 352-4 configured to engage with the corresponding flange(s) 242 of the cradle 120. As will be apparent, the receipt of the rails 348 within the auxiliary channels 248, and the receipt of the connector housing 312 within the guide channel 216, aligns the cradle 120 with mounting surface 304. The feet 256 can be accommodated within recesses 356 defined in the mounting surface 304. The cradle 120 can slide rearward to engage the ledges 344 and 352 with the corresponding flanges 240 and 252.

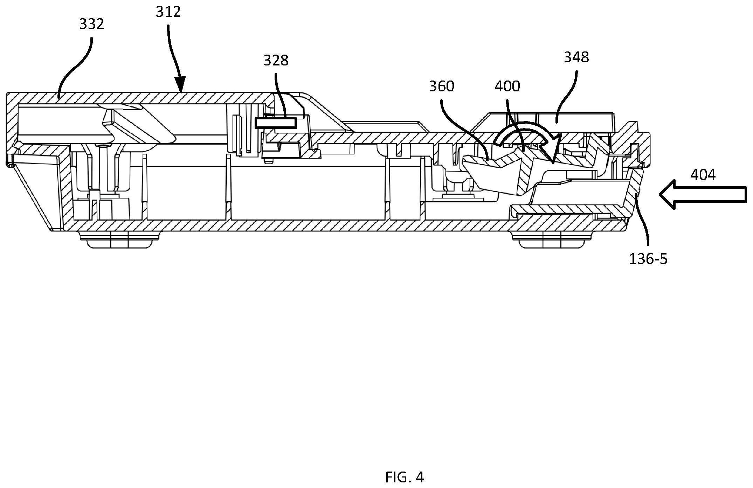

The base 104 can also include a latch 360, e.g., adjacent to the forward edge 320 of the base 104, to engage with the hook 260 and prevent forward motion of the cradle 120 relative to the mounting surface 304. The latch 360 is shown in greater detail in FIG. 4, which illustrates the cross section "S4" labelled in FIG. 3. The latch 360 is rotatable about a pivot 400 defined by the housing 300. The corresponding actuator 136, which can be biased towards an extended position shown in FIG. 3, can be depressed inwards (that is, in a direction 404) to rotate the latch to the retracted position shown in FIG. 4. Releasing the actuator 136 permits the actuator 136 to return to its resting position, and permits the latch 360 to return to the extended position.

When the cradle 120 is placed on the mounting surface 304, the bottom of the cradle 120 can push the latch 360 into the housing 300, as shown in FIG. 4. As the cradle 120 slides rearward, the hook 260 slides off the latch 360, and the latch 360 can rotate into the extended position, engaging with the hook 260 and preventing the cradle 120 from sliding forward.

In other examples, the latches 360 and actuators 136 can be omitted, and the cradles 120 and 108 can be retained by the flanges and ledges mentioned above, e.g., with frictional engagement between those components being sufficient to couple the cradles 120 and 108 to the base 104.

The cradle system 100 as described above permits toolless installation and removal of cradles 120 and 108 to and from the base 104. The direct engagement of the connectors 232 and 328, without the need for flexible cabling between the connectors 232 and 328, and with the guide channel 216 and connector housing 312 ensuring alignment between the connectors, facilitates such installation and removal.

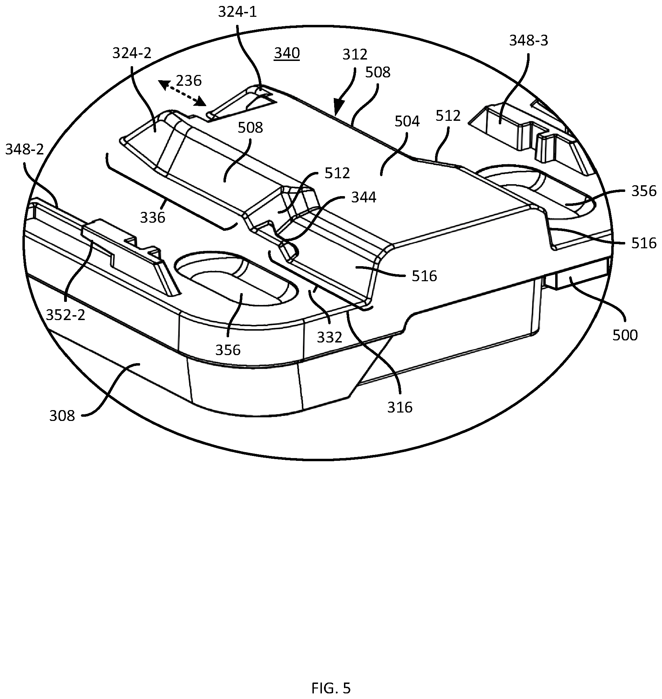

Turning to FIG. 5, a detailed view of a portion of the base 104 is shown, from the rear. The connector housing 312 is shown in greater detail than in FIG. 3, showing the ledge 344 and the space thereunder which accommodates a flange 240 of the cradle 120. FIG. 5 also illustrates an external connector 500, e.g., disposed on a rear wall of the base 104, to receive a power supply and/or a connection to a communications network. As will be apparent, the base 104 can include internal leads, circuits, or the like, to interconnect each of the connectors 328 with the external connector 500.

The connector housing 312 includes, in this example, an upper surface 504 that is parallel to the support surface 340. When the cradle 120 is coupled with the base 104, the upper surface 504 is also parallel with each of the support surface 256, the planar surface 220, and the planar surface 222. The forward portion 336 of the connector housing 312 includes the wings 324, a portion of the upper surface 504, and forward side walls 508 extending from the wings 324 to intermediate side walls 512. The rear portion 332 of the connector housing 312 includes rear side walls 516, and the remainder of the upper surface 504. The side walls 508 and 516 are parallel to the direction of engagement 236. That is, the side walls 508 and 516 are parallel to the direction in which the cradle 120 slides relative to the base 104 to engage and disengage with the base 104. The intermediate walls 512 are at a non-parallel angle relative to the direction of engagement 236, joining the forward side walls 508 with the rear side walls 516 (which are further apart from each other than the forward side walls 508). The side walls 508 and 516 can be perpendicular to the support surface 340 in some examples, but in others, as illustrated in FIG. 5, the side walls 508 and 516 can be inclined, for example, at an angle of about 105 degrees.

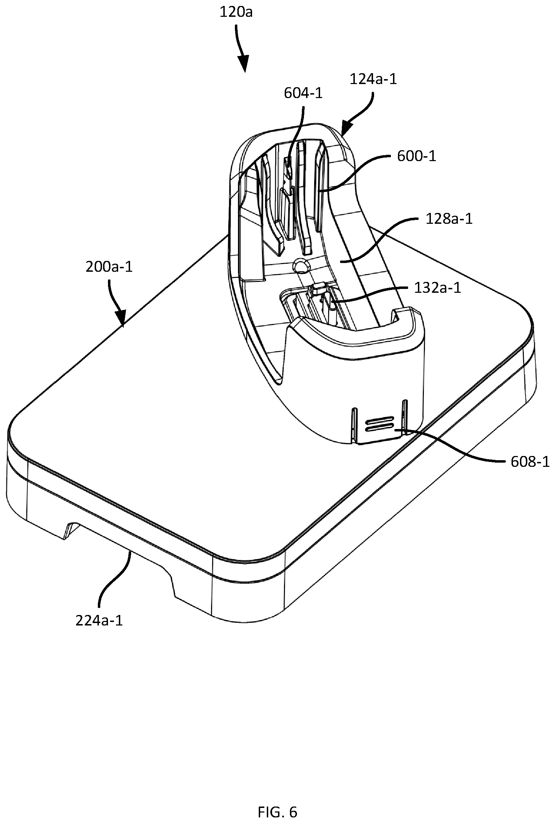

Turning to FIG. 6, in further examples the cups 124 defining the slots 128 for cradles configured to accept mobile computing devices or the like can be modular, such that a given cradle 120 can be reconfigured to accept devices having different form factors. FIG. 6 illustrates a cradle 120a having a housing 200a-1 configured to support a cup 124a-1. The cup 124a-1 defines a slot 128a-1 configured to receive an electronic device, such as a mobile computer or the like, to engage the device with a connector 132a-1. The open end 224a-1 of a guide channel defined by the housing 200a-1 can also be seen in FIG. 6. The underside of the cradle 120a is as described above in connection with the cradles 120.

The cup 124a-1 can include one or more internal structures, such as a ridge 600-1, configured to engage with a housing of the electronic device received in the slot 128a-1, e.g., to retain the device within the slot 128a-1. The cup 124a-1 can include one or more resilient protrusions 604-1, e.g., one such protrusion at each end of the cup 124a-1. The protrusions 604-1 can be configured to protrude into the slot 128a-1 to grasp the electronic device.

The cup 124a-1 can be removable from the housing 200a-1, e.g., by disengaging a latch 608-1 and/or a second latch at an opposing end of the cup 124a-1 from the latch 608-1. The latches 608-1 can, for example, be squeezed inwards (towards the connector 132a-1) to disengage from the housing 200a-1 and permit the cup 124a-1 to be removed from the housing 200a-1. Another cup can then be affixed to the housing 200a-1. Different cups 124a may contain differently-shaped slots 128a, e.g., to accommodate different shapes of electronic device.

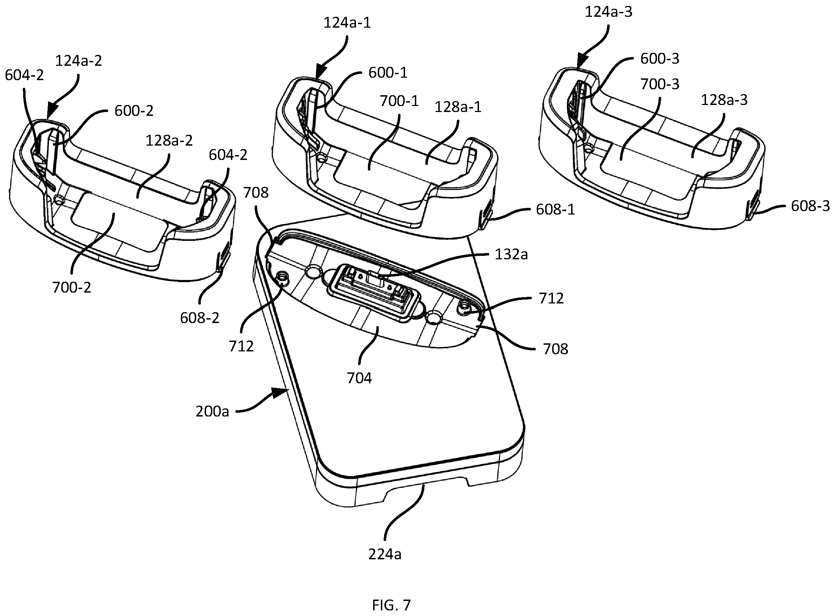

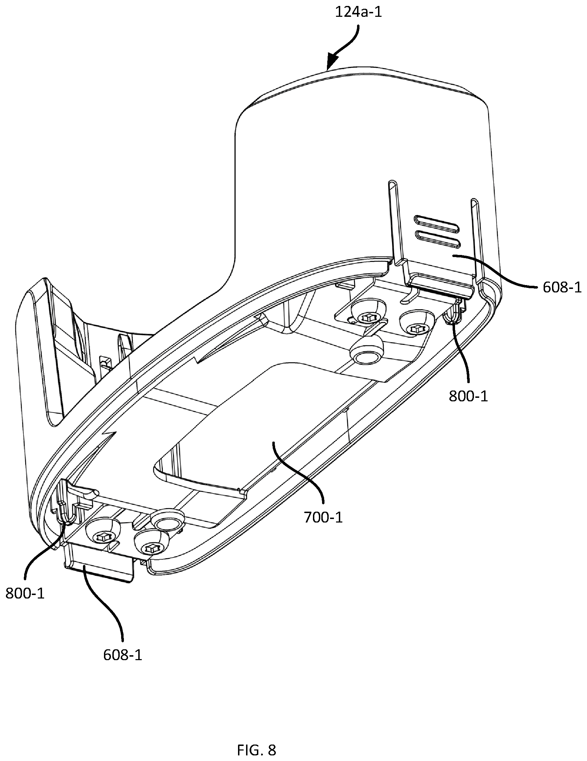

Turning to FIG. 7, the cradle 120a is shown with the cup 124a-1 separated from the housing 200a, and with two alternative cups 124a-2 and 124a-3. Each cup 124a can include ridges 600 and/or other structures within the slots 128a-1, 128a-2, and 128a-3. Those structures may vary in shape and/or size, e.g., as seen comparing the ridge 600-3 to the ridges 600-1 and 600-2, to accommodate different device form factors. The cups 124a include respective openings 700-1, 700-2, and 700-3 therein, to receive the connector 132a when the corresponding cup 124a is coupled to the housing 200a. The housing 200a can include a depression 704, e.g., set into an upper surface of the housing 200a. The connector 132a extends outwards from the depression 704, and the depression 704 can include hooks 708 at opposing ends thereof, corresponding to the positions of the latches 608 of the cups 124a. The housing 200a can also include one or more locating protrusions 712 (two in this example), configured to permit placement of a cup 124a onto the housing 200a in only one position (e.g., preventing accidental placement of a cup 124a backwards onto the housing 200a). FIG. 8 shows a bottom of the cup 124a-1, including both latches 608-1, as well as posts 800-1 configured to engage with the location protrusions 712.

As will be apparent, the features of the cups 124a can also be implemented in connection with the cups 124 and the cradles 120, permitting any of a wide variety of cradles 120 to be deployed with modular cups 124.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one nonlimiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

Certain expressions may be employed herein to list combinations of elements. Examples of such expressions include: "at least one of A, B, and C"; "one or more of A, B, and C"; "at least one of A, B, or C"; "one or more of A, B, or C". Unless expressly indicated otherwise, the above expressions encompass any combination of A and/or B and/or C.

It will be appreciated that some embodiments may be comprised of one or more specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.
The following examples also form part of the present disclosure:
1. A cradle, comprising:
   a cradle housing having an upper portion and a lower portion joined by a perimeter wall;
   a slot at the upper portion of the cradle housing, the slot configured to receive an electronic device and having a first connector configured to engage with the electronic device;
   a guide channel at the lower portion of the cradle housing, the guide channel configured to removably receive a connector housing of a cradle base; and
   a second connector disposed within the guide channel, the second connector configured to engage with a complementary connector disposed on the connector housing of the cradle base when the connector housing of the cradle base is removably received within the guide channel.
2. The cradle of example 1, further comprising:
   a planar surface adjacent to the guide channel, the planar surface configured to rest on a support surface of the cradle base when the connector housing of the cradle base is received within the guide channel.
3. The cradle of example 2, wherein the guide channel extends from an open end at the perimeter wall to a closed end; and
   wherein the second connector is disposed at the closed end of the guide channel.
4. The cradle of example 3, wherein the second connector extends into the guide channel at the closed end and divides the guide channel into two channel portions.
5. The cradle of example 3, wherein the second connector is configured to engage with the complementary connector of the cradle base in a direction of engagement that is parallel to the planar surface and the support surface.
6. The cradle of example 5, wherein the guide channel includes an upper surface parallel to the planar surface.
7. The cradle of example **1,** further comprising: a flange extending into the guide channel, the flange configured to engage with a corresponding ledge on the connector housing of the cradle base to secure the cradle to the cradle base.
8. The cradle of example 1, further comprising: a hook at the lower portion of the housing, the hook configured to releasably engage a latch of the cradle base to constrain motion of the cradle relative to the cradle base.
9. The cradle of example 8, wherein the guide channel extends from an open end at a rear portion of the perimeter wall to a closed end; and
   wherein the hook is disposed between the closed end and a forward portion of the perimeter wall.
10. The cradle of example 1, further comprising: an auxiliary channel at the lower portion, the auxiliary channel configured to receive a rail of the cradle base.
11. The cradle of example 1, further comprising: a cup removably coupled to the upper portion of the cradle housing, the cup defining the slot.
12. A cradle base, comprising:
   a housing having a lower portion and an upper portion joined by a perimeter wall, the upper portion having a support surface;
   a connector housing protruding upwards from the support surface of the upper portion of the housing, the connector housing configured to slidingly engage with a guide channel of a cradle to retain the cradle against the support surface; and
   a connector disposed on the connector housing, the connector configured to engage with a complementary connector of the cradle.
13. The cradle base of example 12, wherein the connector housing extends from a first end adjacent to a rear edge of the housing to a second end between the rear edge and a forward edge of the housing; and
   wherein the connector is disposed adjacent to the second end of the connector housing.
14. The cradle base of example 13, wherein the second end of the connector housing includes a pair of wings parallel to a direction of engagement between the connector and the complementary connector, and the connector is disposed between the wings.
15. The cradle base of example 12, wherein the connector is configured to engage with the complementary connector of the cradle in a direction of engagement that is parallel to the support surface of the housing.
16. The cradle base of example 12, wherein the connector housing includes a ledge extending outward therefrom, the ledge configured to engage with a corresponding flange of the guide channel.
17. The cradle base of example 12, further comprising: a latch configured to engage with a corresponding hook of the cradle.
18. The cradle base of example 12, wherein the connector housing includes an upper surface parallel to the support surface, the upper surface configured to slide along a corresponding surface of the guide channel.
19. A cradle system, comprising:
   a cradle base having:
      a support surface;
      a connector housing protruding upwards from the support surface and extending along a portion of the support surface; and
      a base connector disposed on the connector housing; and
   a cradle having:
      a slot configured to receive an electronic device;
      a guide channel on an opposite of the cradle from the slot, the guide channel configured to removably receive the connector housing of the cradle base; and
      a cradle connector within the guide channel, the cradle connector configured to engage with the base connector in response to receipt of the connector housing within the guide channel.
20. The cradle system of example 19, wherein the cradle connector is configured to engage with the base connector in a direction of engagement that is parallel to the support surface.
21. The cradle system of example 19, wherein the cradle base further comprises a movable latch; and
   wherein the cradle further comprises a hook configured to engage with the latch to constrain sliding motion of the cradle relative to the mounting surface.

## Claims

1. A cradle, comprising:
a cradle housing having an upper portion and a lower portion joined by a perimeter wall;
a slot at the upper portion of the cradle housing, the slot configured to receive an electronic device and having a first connector configured to engage with the electronic device;
a guide channel at the lower portion of the cradle housing, the guide channel configured to removably receive a connector housing of a cradle base; and
a second connector disposed within the guide channel, the second connector configured to engage with a complementary connector disposed on the connector housing of the cradle base when the connector housing of the cradle base is removably received within the guide channel.

2. The cradle of claim 1, further comprising:
a planar surface adjacent to the guide channel, the planar surface configured to rest on a support surface of the cradle base when the connector housing of the cradle base is received within the guide channel.

3. The cradle of claim 2, wherein the guide channel extends from an open end at the perimeter wall to a closed end; and
wherein the second connector is disposed at the closed end of the guide channel, and wherein the second connector extends into the guide channel at the closed end and divides the guide channel into two channel portions.

4. The cradle of claim 2, wherein the guide channel extends from an open end at the perimeter wall to a closed end; and
wherein the second connector is disposed at the closed end of the guide channel, and wherein the second connector is configured to engage with the complementary connector of the cradle base in a direction of engagement that is parallel to the planar surface and the support surface.

5. The cradle of claim 1, further comprising: a flange extending into the guide channel, the flange configured to engage with a corresponding ledge on the connector housing of the cradle base to secure the cradle to the cradle base.

6. The cradle of claim 1, further comprising: a hook at the lower portion of the housing, the hook configured to releasably engage a latch of the cradle base to constrain motion of the cradle relative to the cradle base, wherein the guide channel extends from an open end at a rear portion of the perimeter wall to a closed end; and
wherein the hook is disposed between the closed end and a forward portion of the perimeter wall.

7. The cradle of claim 1, further comprising: an auxiliary channel at the lower portion, the auxiliary channel configured to receive a rail of the cradle base.

8. The cradle of claim 1, further comprising: a cup removably coupled to the upper portion of the cradle housing, the cup defining the slot.

9. A cradle base, comprising:
a housing having a lower portion and an upper portion joined by a perimeter wall, the upper portion having a support surface;
a connector housing protruding upwards from the support surface of the upper portion of the housing, the connector housing configured to slidingly engage with a guide channel of a cradle to retain the cradle against the support surface; and
a connector disposed on the connector housing, the connector configured to engage with a complementary connector of the cradle.

10. The cradle base of claim 9, wherein the connector housing extends from a first end adjacent to a rear edge of the housing to a second end between the rear edge and a forward edge of the housing; and
wherein the connector is disposed adjacent to the second end of the connector housing.

11. The cradle base of claim 10, wherein the second end of the connector housing includes a pair of wings parallel to a direction of engagement between the connector and the complementary connector, and the connector is disposed between the wings.

12. The cradle base of claim 9, wherein the connector is configured to engage with the complementary connector of the cradle in a direction of engagement that is parallel to the support surface of the housing.

13. The cradle base of claim 9, wherein the connector housing includes a ledge extending outward therefrom, the ledge configured to engage with a corresponding flange of the guide channel.

14. The cradle base of claim 9, further comprising: a latch configured to engage with a corresponding hook of the cradle.

15. A cradle system, comprising:
a cradle base having:
a support surface;
a connector housing protruding upwards from the support surface and extending along a portion of the support surface; and
a base connector disposed on the connector housing; and
a cradle having:
a slot configured to receive an electronic device;
a guide channel on an opposite of the cradle from the slot, the guide channel configured to removably receive the connector housing of the cradle base; and
a cradle connector within the guide channel, the cradle connector configured to engage with the base connector in response to receipt of the connector housing within the guide channel.
